# EUROPEAN PATENT APPLICATION

(11) **EP 3 751 021 A1**
(43) Date of publication of application: **16.12.2020**
(21) Application number: 19750393.1
(22) Date of filing: 28.01.2019
(51) Int. Cl.: C25D 7/00, C25D 15/02, C25D 3/46, C25D 3/48, C25D 3/50

(54) **PLATING FILM**

(30) Priority: 08.02.2018 JP 2018021220; 08.02.2018 JP 2018021221; 21.08.2018 JP 2018154809; 09.01.2019 JP 2019001977; 09.01.2019 JP 2019001978
(71) Applicant: Daicel Corporation, Osaka 530-0011 (JP)
(72) Inventor: KIMOTO, Norihiro, Tokyo 108-8230 (JP); GOTO, Tomohiro, Tokyo 108-8230 (JP); UMEMOTO, Kouichi, Tokyo 108-8230 (JP)
(74) Representative: Grünecker Patent- und Rechtsanwälte PartG mbB
(86) International application number: PCT/JP2019/003762
(87) International publication number: WO 2019/156007

(57) **Abstract**

Provided is a plating film that can exhibit a high gloss and a low contact resistance value. The plating film according to an embodiment of the present invention is a plating film including a noble metal matrix and nanodiamond particles dispersed in the noble metal matrix. The plating film according to an embodiment of the present invention preferably has a gloss at an incident angle of 60° of not less than 250 GU and/or a contact resistance value at a load of 50 gf of not greater than 1 mΩ, and a difference between a contact resistance value at a load of 50 gf and a contact resistance value at a load of 5 gf of not greater than 5 mΩ. The nanodiamond particles are preferably nanodiamond particles including a surface-modifying group containing a sterically repulsive group and particularly preferably nanodiamond particles including a surface-modifying group containing a polyglycerol chain.

## Description

### Technical Field

The present invention relates to a plating film. The present application claims priority to JP 2018-21220 and JP 2018-21221 filed in Japan on February 8, 2018, JP 2018-154809 filed in Japan on August 21, 2018, and JP 2019-001977 and JP 2019-001978 filed in Japan on January 9, 2019, the contents of which are incorporated herein.

### Background Art

Among connecting components, such as low-current (signal) switches and connectors used in electrical and electronic equipment, connecting components repeatedly used at a low contact load require high connection reliability. Thus, connecting components in which a surface of a conductive metal member is plated with a noble metal are used.

In addition, plating films are required to have an appropriate gloss and excellent ductility, and to have non-porosity, corrosion resistance, low friction, and low contact resistance.

Patent Document 1 describes rolling a plating film to smooth the surface, thereby reducing a contact resistance value of the plating film. However, there has been a problem in that the production method is complicated.

In addition, another known method includes adding a leveling agent to a plating bath to smooth the surface of the resulting plating film. For example, Patent Document 2 describes that use of an aminosulfonic acid polymer as a leveling agent reduces small masses formed of a metal crystal and provides a plating film with a high gloss.

However, a plating film with a higher gloss and a lower contact resistance value is demanded.

### Citation List

### Patent Document

Patent Document 1: JP 2015-117424 A
Patent Document 2: JP 2016-148023 A

### Summary of Invention

### Technical Problem

Thus, an object of the present invention is to provide a plating film that can exhibit a high gloss and a low contact resistance value.

Another object of the present invention is to provide an electronic component including the plating film.

Still another object of the present invention is to provide a novel leveling agent that imparts a high gloss and a low contact resistance value to a plating film.

### Solution to Problem

As a result of diligent research to solve the above problems, the present inventors found that use of a plating bath containing nanodiamond particles inhibits crystal growth of a noble metal by the nanodiamond particles, leading to formation of fine crystal grains, and this provides a plating film with a smoothed surface and thus with a high gloss and/or a low contact resistance value. The present invention was completed based on these findings.

That is, an embodiment of the present invention provides a plating film including a noble metal matrix and nanodiamond particles dispersed in the noble metal matrix.

An embodiment of the present invention also provides the plating film having a gloss at an incident angle of 60° of not less than 250 GU.

An embodiment of the present invention also provides the plating film that is produced using a plating bath containing noble metal ions and nanodiamond particles.

An embodiment of the present invention also provides the plating film having a gloss at an incident angle of 60° by not less than 20 GU compared with a plating film produced using a plating bath having an identical composition except for not containing nanodiamond particles.

An embodiment of the present invention also provides the plating film having a contact resistance value at a load of 50 gf of not greater than 1 mΩ, and a difference between a contact resistance value at a load of 50 gf and a contact resistance value at a load of 5 gf of not greater than 5 mΩ.

An embodiment of the present invention also provides the plating film having a surface roughness (Ra) of not greater than 0.5 µm.

An embodiment of the present invention also provides the plating film in which a particle diameter (D50) of the nanodiamond particles dispersed in the noble metal matrix by scanning electron microscopy (SEM) is in a range from 4 to 100 nm.

An embodiment of the present invention also provides the plating film in which the nanodiamond particles include a surface-modifying group containing a sterically repulsive group.

An embodiment of the present invention also provides the plating film in which the nanodiamond particles include a surface-modifying group containing a polyglycerol chain.

An embodiment of the present invention also provides the plating film in which a content of the nanodiamond particles is from 0.5 to 25 area% of the plating film.

An embodiment of the present invention also provides a plating film producing method for producing the plating film described above by electrolytic plating using a plating bath containing noble metal ions and nanodiamond particles, the plating bath containing from 0.001 to 1.0 g/L of the nanodiamond particles and having a light transmittance of light at a wavelength of 600 nm of not less than 95%.

An embodiment of the present invention also provides a plating bath containing noble metal ions and nanodiamond particles, the plating bath containing from 0.005 to 1.0 g/L of the nanodiamond particles and having a light transmittance of light at a wavelength of 600 nm of not less than 95%.

An embodiment of the present invention also provides an electronic component including the plating film.

An embodiment of the present invention also provides a leveling agent for plating, the leveling agent containing nanodiamond particles including a surface-modifying group containing a polyglycerol chain.

### Advantageous Effects of Invention

The plating bath according to an embodiment of the present invention is a plating bath containing noble metal ions and nanodiamond particles, the plating bath containing a specific amount of nanodiamond particles in a highly dispersed state in the plating bath. In addition, the plating film according to an embodiment of the present invention produced using the plating bath has a configuration in which the nanodiamond particles are highly dispersed in the noble metal matrix, and the nanodiamond particles inhibit crystal growth of the noble metal, leading to formation of fine crystal grains. Thus, the plating film according to an embodiment of the present invention has excellent surface smoothness.

The plating film according to an embodiment of the present invention has excellent surface smoothness as described above and thus has a high gloss. In addition, the plating film according to an embodiment of the present invention has excellent surface smoothness, and thus has a low coefficient of friction. Furthermore, the plating film according to an embodiment of the present invention has an extremely small contact resistance value probably because the nanodiamond particles contained in the plating film exhibit an action to improve conductivity, although the mechanism is not clear. The effect of lowering the contact resistance value of the plating film according to an embodiment of the present invention far exceeds the effect obtained only by smoothing the surface of the plating film. Still more, the plating film according to an embodiment of the present invention contains nanodiamond particles and thus also has excellent oxidation resistance.

The plating film according to an embodiment of the present invention has the properties described above and thus is suitably used in connecting components for electronic devices, decorative items, and the like. In addition, the plating film according to an embodiment of the present invention is suitably used in connecting components repeatedly used at a low contact load among connecting components (or electrical contacts), such as low-current (signal) switches and connectors used in electrical and electronic equipment.

### Brief Description of Drawings

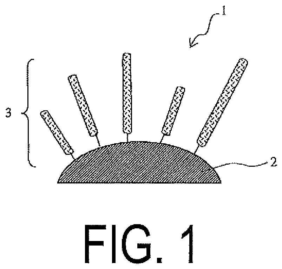

FIG. 1 is an enlarged schematic view illustrating an example of an ND particle (1) including a surface-modifying group according to an embodiment of the present invention, the ND particle (portion) (2) including a surface-modifying group (3) on the surface thereof.
FIG. 2 is an image illustrating an SEM observation result of a cross section of a plating film obtained in Example 1.
FIG. 3 is an image illustrating an SEM observation result of a cross section of a plating film obtained in Comparative Example 1.
FIG. 4 is an image illustrating an SEM observation result of a cross section of a plating film obtained in Comparative Example 2.
FIG. 5 is a graph showing a contact resistance value measurement result of the plating film obtained in Example 1.
FIG. 6 is a graph showing a contact resistance value measurement result of a plating film obtained in Comparative Example 4.

### Description of Embodiments

### Plating film

A plating film according to an embodiment of the present invention contains a noble metal matrix and nanodiamond particles (which may be hereinafter referred to as "ND particles") dispersed in the noble metal matrix.

The plating film according to an embodiment of the present invention has excellent surface smoothness, is obtained by carrying out only a plating treatment without carrying out a surface flattening treatment, and has a surface roughness (Ra) of, for example, not greater than 0.5 µm, preferably not greater than 0.4 µm, more preferably not greater than 0.3 µm, even more preferably not greater than 0.29 µm, still more preferably not greater than 0.2 µm, particularly preferably not greater than 0.15 µm, and most preferably not greater than 0.1 µm.

In the plating film according to an embodiment of the present invention, the plating film obtained by carrying out only a plating treatment without carrying out a surface flattening treatment, has a surface roughness (Ra) (e.g., a surface roughness in a film thickness of not less than 1 µm or preferably a surface roughness in a film thickness of not less than 1.5 µm) of, for example, not greater than 0.5 µm, preferably not greater than 0.4 µm, more preferably not greater than 0.3 µm, even more preferably not greater than 0.29 µm, still more preferably not greater than 0.2 µm, particularly preferably not greater than 0.15 µm, and most preferably not greater than 0.1 µm.

The plating film according to an embodiment of the present invention has excellent surface smoothness as described above, and thus the plating film obtained by carrying out only a plating treatment without carrying out a surface flattening treatment has a gloss at an incident angle of 60° of, for example, not less than 250 GU. The gloss is more preferably not less than 300 GU, even more preferably not less than 400 GU, still more preferably not less than 500 GU, even still more preferably not less than 550 GU, particularly preferably not less than 600 GU, and most preferably not less than 700 GU. The upper limit of the gloss is, for example, 1000 GU.

In addition, the plating film according to an embodiment of the present invention has a gloss at an incident angle of 60°, for example, greater by not less than 20 GU (preferably not less than 50 GU, more preferably not less than 100 GU, particularly preferably not less than 150 GU, most preferably not less than 300 GU, and especially preferably not less than 400 GU, and the upper limit is approximately 500 GU) compared with a plating film identical to the plating film according to an embodiment of the present invention except for not containing ND particles, that is, a plating film obtained using a plating bath having an identical composition except for not containing ND particles in identical treatment conditions except that the plating bath is different as described above.

Furthermore, the plating film according to an embodiment of the present invention has excellent surface smoothness as described above and thus exhibits good conductivity also at a low contact load, and a contact resistance value at a load of 50 gf is, for example, not greater than 1 mΩ. In addition, a difference between a contact resistance value at a load of 50 gf and a contact resistance value at a load of 5 gf is, for example, not greater than 5 mΩ. The plating film according to an embodiment of the present invention, in particular, preferably has a contact resistance value at a load of 50 gf of not greater than 1 mΩ, and a difference between a contact resistance value at a load of 50 gf and a contact resistance value at a load of 5 gf of not greater than 5 mΩ.

Furthermore, the plating film according to an embodiment of the present invention contains ND particles (in particular, hydrophilic ND particles described below) and thus has excellent oxidation resistance. An increased amount of a noble metal oxide in the plating film after storage in a room (at a temperature of 25°C and a humidity of 50%) not exposed to direct sunlight for 7 days is, for example, less than 1 wt.%, preferably less than 0.5 wt.%, particularly preferably less than 0.3 wt.%, and most preferably less than 0.1 wt.%, relative to the plating film immediately after production.

In the plating film according to an embodiment of the present invention, a particle diameter (D50) of the ND particles dispersed in the noble metal matrix by SEM is in a range from, for example, 4 to 100 nm, preferably from 10 to 80 nm, particularly preferably from 20 to 60 nm, and most preferably from 30 to 50 nm.

In addition, in the plating film according to an embodiment of the present invention, a content of the ND particles is, for example, from 0.5 to 25 area%, preferably from 2 to 20 area%, and particularly preferably from 5 to 15 area%. The plating film according to an embodiment of the present invention contains the ND particles in the above range and thus has excellent surface smoothness and excellent gloss. Furthermore, probably because sp2 carbon on the surface of the ND particles (or sp2 carbon and a surface-modifying group containing a polyglycerol chain on the surface of the ND particles) exhibits an effect of improving the conductivity, an extremely excellent lowering effect on the contact resistance value is obtained, which exceeds a range of the effect (i.e., the effect of lowering the contact resistance value) obtained by smoothing the surface of the plating film. The content of the ND particles less than the above range would be less likely to provide the above effect. On the other hand, the content of the ND particles greater than the above range would not provide an effect of further improving the above effect but would worsen the adhesion between the plating film and the base, and the plating film would be prone to be peeled off.

The ND particles are fine particles with a particle diameter of primary particles of not greater than 10 nm. ND particles have large proportions of surface atoms, thus a total van der Waals force that can act between surface atoms of adjacent particles is strong, and this is likely to cause aggregation. Additionally, a phenomenon called agglutination may occur where particles aggregate very strongly by contribution of Coulomb interaction between crystal planes of adjacent crystallites. ND particles thus have unique properties that may cause double interactions between crystallites or primary particles. Thus, the ND particles in an embodiment of the present invention are preferably ND particles with a hydrophilized surface (i.e., hydrophilic ND particles) in that hydrophilic ND particles are easily dispersed in a plating bath.

The hydrophilic ND particles include (1) ND particles coated with a hydrophilic polymer and (2) ND particles modified with a hydrophilic polymer. In an embodiment of the present invention, the hydrophilic ND particles are, among them, preferably (2) ND particles modified with a hydrophilic polymer in terms of achieving particularly excellent dispersibility due to steric repulsion of the hydrophilic polymer that modifies the surface (i.e., an effect of physically preventing aggregation by steric hindrance).

Examples of the hydrophilic polymer include polyglycerol, polyvinylpyrrolidone, polyethylene glycol, polyvinyl alcohol, poly(meth)acrylic acid, polyacrylamide, polyethyleneimine, vinyl ether polymers, and water-soluble polyester (e.g., such as polydimethylol propionate); and natural polymeric polysaccharides, such as cellulose, dextrin, and starch, and their derivatives (e.g., such as methylcellulose, hydroxyethylcellulose, and carboxymethylcellulose). In an embodiment of the present invention, the hydrophilic polymer is, among them, preferably at least one selected from polyglycerol, polyvinylpyrrolidone, polyethylene glycol, polyvinyl alcohol, and poly(meth)acrylic acid, and particularly preferably polyglycerol.

Thus, the ND particles in an embodiment of the present invention are preferably ND particles including a surface-modifying group containing a sterically repulsive group derived from a hydrophilic polymer, and in particular, ND particles including a surface-modifying group containing a sterically repulsive group derived from polyglycerol (i.e., ND particles including a surface-modifying group containing a polyglycerol chain) are preferably used.

The surface-modified ND particles including a surface-modifying group containing a sterically repulsive group derived from a hydrophilic polymer or the ND particles modified with a surface-modifying group containing a polyglycerol chain can exhibit excellent dispersibility because the aggregation of ND particles is prevented in a plating bath by the steric hindrance of the surface-modifying group, compared with ND particles including no surface-modifying group.

The ND particles modified with a surface-modifying group containing a polyglycerol chain have, for example, a configuration in which the polyglycerol chain represented by Formula (1) below is bonded to a surface functional group of the ND particles. In the formula below, n represents the number of glycerin units constituting the polyglycerol chain and is an integer of 1 or greater.

HO-(C₃H₆O₂)ₙ-H (1)

The C₃H₆O₂ in the parentheses of Formula (1) may have a structure represented by Formulas (2) and/or (3) below.

-CH₂-CHOH-CH₂O- (2)

-CH(CH₂OH)CH₂O- (3)

The polyglycerol chain includes a polyglycerol chain of a linear chain structure, a branched chain structure, and a cyclic structure.

The introduction amount of the surface-modifying group is, for example, approximately from 0.4 to 1.0 parts by mass, preferably from 0.5 to 0.9 parts by mass, and particularly preferably from 0.6 to 0.8 parts by mass per part by mass of the ND particle portion. The introduction amount of the surface-modifying group less than the above range would tend to cause difficulty in preventing the aggregation of the ND particles. On the other hand, the introduction amount of the surface-modifying group greater than the above range would cause entanglement of the surface-modifying groups, and the ND particles would rather be prone to aggregate. A mass ratio of the surface-modifying group portion to the ND particle portion can be determined by measuring a mass change during a heat treatment using a differential thermal balance analyzer (TG-DTA) or by measuring a composition ratio by elemental analysis.

### Method for producing plating film

The plating film according to an embodiment of the present invention can be produced by a well-known and commonly used electrolytic plating (preferably electrolytic composite plating). More specifically, a member on which a plating film is to be formed (e.g., a conductive substrate, such as a copper substrate) is immersed in a plating bath containing noble metal ions and ND particles, and electrolysis is carried out to allow the noble metal ions to deposit on the member surface together with the ND particles. This can incorporate the ND particles into the film of the noble metal. This is continued until a desired thickness is obtained, and the plating film having a configuration in which the ND particles are dispersed in the noble metal matrix (or a plating film formed of a noble metal-ND particle composite material) can be produced.

The thickness of the plating film can be appropriately set according to the application. In applications for coating the surfaces of conductive metal members in connecting components, such as switches and connectors, decorative items, and the like, the thickness of the plating film is, for example, approximately from 0.1 to 50 µm, preferably from 0.5 to 30 µm, particularly preferably from 1 to 20 µm, and most preferably from 1.5 to 10 µm.

### Plating bath

The plating bath in an embodiment of the present invention contains a plating solution and ND particles. The content of the ND particles in the plating bath is, for example, in a range from 0.001 to 1.0 g/L (the lower limit is preferably 0.003 g/L, more preferably 0.006 g/L, even more preferably 0.01 g/L, particularly preferably 0.03 g/L, and most preferably 0.06 g/L, and the upper limit is preferably 0.5 g/L and particularly preferably 0.3 g/L). The content of the ND particles less than the above range would tend to reduce the surface smoothness of the resulting plating film and thus the gloss, or would tend to increase the contact resistance value. On the other hand, the content of the ND particles greater than the above range would not provide an effect of further improving the surface smoothness of the resulting plating film to further improve the gloss, or an effect of further reducing the contact resistance value, but would rather tend to worsen the adhesion between the plating film and the base, and the plating film would be prone to be peeled off.

The plating bath contains ND particles in a highly dispersed (or colloidally dispersed) state and thus has excellent transparency. The light transmittance of light at a wavelength of 600 nm measured in a quartz glass cell with an optical path length of 1 cm is, for example, not less than 95%. In addition, a haze value (haze) is, for example, from 0 to 5, preferably from 0 to 2, particularly preferably from 0 to 1, most preferably from 0 to 0.5, and especially preferably from 0 to 0.4. A completely transparent body has a haze value of 0, and a haze value increases as a haze increases. The haze value can be measured by a method according to JIS K7136.

The particle diameter (D10) of the ND particles in the plating bath is, for example, not greater than 100 nm, preferably not greater than 60 nm, particularly preferably not greater than 50 nm, and most preferably not greater than 40 nm. The lower limit of the particle diameter (D10) of the ND particles is, for example, 10 nm.

The particle diameter (D50) of the ND particles in the plating bath is, for example, not greater than 100 nm, preferably not greater than 70 nm, particularly preferably not greater than 60 nm, and most preferably not greater than 50 nm. The lower limit of the particle diameter (D50) of the ND particles is, for example, 10 nm.

The particle diameter (D90) of the ND particles in the plating bath is, for example, not greater than 100 nm, preferably not greater than 90 nm, and particularly preferably not greater than 80 nm. The lower limit of the particle diameter (D90) of the ND particles is, for example, 10 nm.

The particle diameter of the ND particles in the plating bath can be measured by dynamic light scattering.

The pH of the plating bath is preferably, for example, approximately 2 in a plating bath containing gold ions as the noble metal ions and preferably, for example, approximately 1 in a plating bath containing rhodium ions as the noble metal ions in terms of obtaining a plating film having excellent surface smoothness, a high gloss, and a low contact resistance value. The pH can be adjusted using a pH adjusting agent or the like.

The plating bath contains hydrophilic ND particles having excellent dispersibility as described above, and thus a surfactant is not necessarily contained. The content of a surfactant (e.g., such as a non-ionic surfactant with a molecular weight from 30000 to 200000) in the plating bath is, for example, less than 0.5 g/L, preferably not greater than 0.1 g/L, particularly preferably not greater than 0.05 g/L, and most preferably not greater than 0.01 g/L, and the plating bath is especially preferably substantially free of the surfactant.

The plating bath can be prepared, for example, by adding an ND particle dispersion to a plating solution described below.

### Plating solution

The plating solution in an embodiment of the present invention contains components essential for preparing the plating film and contains no ND particles described above. The plating solution contains at least noble metal ions (e.g., at least one selected from gold ions, silver ions, platinum ions, palladium ions, rhodium ions, iridium ions, ruthenium ions, and osmium ions).

The plating solution can be prepared, for example, by blending a noble metal salt, a conductivity salt, a complexing agent, an additive for adjusting the appearance and physical properties of the film, or the like. The noble metal salt is present as the noble metal ions in the plating bath. Additionally, the noble metal salt may also be present as oxoacid ions of the noble metal or noble metal complex ions bonded to the complexing agent.

The concentration of the noble metal salt contained in the plating solution is, for example, from 0.01 to 0.5 mol/L and preferably from 0.05 to 0.2 mol/L.

Examples of the complexing agent include citric acid, lactic acid, malic acid, glycolic acid, and their salts. The concentration of the complexing agent contained in the plating solution is, for example, from 0.02 to 1.0 mol/L and preferably from 0.1 to 0.5 mol/L.

Examples of the plating solution for gold plating include potassium gold (III) chloride as a gold salt and a mixture of sulfuric acid and the like as a conductivity salt. In an embodiment of the present invention, a commercially available product, such as, for example, trade name "Aurobond XPH20" (available from Electroplating Engineers of Japan Ltd.) can be used.

Examples of the plating solution for rhodium plating include rhodium sulfate and rhodium phosphate as rhodium salts; sulfuric acid and phosphoric acid as conductivity salts; sulfamic acid and a mixture of organic carboxylic acid and the like as stress reducers. In an embodiment of the present invention, a commercially available product, such as, for example, trade name "Rhodex" (available from Electroplating Engineers of Japan Ltd.) can be used.

### ND particle dispersion

The ND particle dispersion is formed by dispersing ND particles in a dispersion medium (preferably water). The ND particle concentration in the ND particle dispersion is, for example, approximately from 1 to 100 g/L.

The ND particles are preferably hydrophilic ND particles in terms of excellent dispersibility, particularly preferably ND particles modified with a hydrophilic polymer, most preferably ND particles including a surface-modifying group containing a sterically repulsive group derived from a hydrophilic polymer, and especially preferably ND particles including a surface-modifying group containing a polyglycerol chain.

The particle diameter (D50) of the ND particles in the ND particle dispersion is, for example, not greater than 100 nm, preferably not greater than 70 nm, particularly preferably not greater than 60 nm, and most preferably not greater than 50 nm. The lower limit of the particle diameter (D50) of the ND particles is, for example, 10 nm. The particle diameter of the ND particles in the ND particle dispersion can be measured by dynamic light scattering.

A surfactant has been used in the art to disperse the ND particles prone to aggregation. For example, to disperse the ND particles onto which a polyethylene glycol chain is introduced, a non-ionic surfactant with a molecular weight from 30000 to 200000 (in particular, an alkylphenol surfactant, such as polyethylene glycol-4-octyl phenyl ether, and the like) has been used. However, there has been a problem in that the surfactant as an impurity is incorporated in the plating film and causes a deterioration in quality, such as a decreased gloss and an increased contact resistance value.

On the contrary, the hydrophilic ND particles have excellent dispersibility as described above, thus addition of the surfactant into the ND particle dispersion is not needed. Thus, the content of the surfactant (in particular, such as a non-ionic surfactant with a molecular weight from 30000 to 200000) in the ND particle dispersion in an embodiment of the present invention is, for example, less than 0.5 g/L, preferably not greater than 0.1 g/L, particularly preferably not greater than 0.05 g/L, and most preferably not greater than 0.01 g/L, and especially preferably, the ND particle dispersion is substantially free of the surfactant.

The ND particle dispersion added to the plating bath can smooth the surface of the resulting plating film. Thus, the resulting plating film has a high gloss and/or a low contact resistance value. Thus, the ND particle dispersion can be used as, for example, a leveling agent for plating (or a conductivity enhancer or a brightener for the plating film).

The ND particle dispersion further has an effect of preventing oxidation of the noble metal forming the plating film (oxidation resistance). Thus, the ND particle dispersion can be used as an antioxidant for plating or as an antioxidant used by addition to the plating bath.

### Method for preparing ND particle dispersion

The hydrophilic ND particles can be produced, for example, by using ND particles including a surface functional group, such as an OH group, a COOH group, or an NH₂ group, and bonding a hydrophilic polymer to the surface functional group of the ND particles directly or via a linker (e.g., such as an ester bond, an amide bond, an imide bond, an ether bond, an urethane bond, and an urea bond). The linker can be formed by a method in which a condensing agent is reacted with the surface functional group of the ND particles.

In addition, a detonation method provides the ND particles including a functional group, such as an OH group, a COOH group, or an NH₂ group. Furthermore, a detonation method provides the ND particles with a small average particle diameter compared with a shock compression method. Thus, in an embodiment of the present invention, a method for producing the ND particles is preferably a detonation method.

An example of a method for producing the ND particles including a surface-modifying group containing a polyglycerol chain will be described; however, the ND particle dispersion used in an embodiment of the present invention is not limited to those obtained by the following production method.

### Formation

First, an explosive primed with an electric detonator is placed inside a pressure-resistant detonation vessel, and the vessel is sealed in a state where a gas of atmospheric composition at normal pressure and the explosive to be used coexist inside the vessel. The vessel is, for example, made of iron, and the capacity of the vessel is, for example, from 0.5 to 40 m³. A mixture of trinitrotoluene (TNT) and cyclotrimethylenetrinitramine, namely, hexogen (RDX), can be used as the explosive. The mass ratio of TNT and RDX (TNT/RDX) is, for example, in a range from 40/60 to 60/40.

In the formation, the electric detonator is then triggered, and the explosive is detonated in the vessel. During the detonation, carbon released by partially incomplete combustion of the explosive used to serve as a raw material forms ND particles under the actions of the pressure and energy of a shock wave generated by the explosion. Due to Coulomb interaction between crystal planes, in addition to van der Waals forces between adjacent primary particles or crystallites, the produced ND particles aggregate very firmly to form agglutinates.

In the formation, the vessel is then allowed to stand at room temperature for 24 hours to cool, and the temperatures of the vessel and the inside of the vessel are lowered. After this cooling, an ND particle crude product (containing the agglutinates of the ND particles formed as described above and soot) deposited on the inner wall of the vessel is scrapped with a spatula, and the ND particle crude product is obtain.

### Acid treatment

An acid treatment is a process that allows a strong acid to act on the ND particle crude product, which is a raw material, for example, in a water solvent to remove a metal oxide. The ND particle crude product obtained by the detonation method is prone to containing a metal oxide, and the metal oxide is an oxide of Fe, Co, Ni, or the like resulting from the vessel or the like used in the detonation method. The metal oxide can be dissolved and removed from the ND particle crude product, for example, by allowing a predetermined strong acid to act on the ND particle crude product in a water solvent. The strong acid used in the acid treatment is preferably a mineral acid, and examples of the strong acid include hydrochloric acid, hydrofluoric acid, sulfuric acid, nitric acid, and their mixtures. The concentration of the strong acid used in the acid treatment is, for example, from 1 to 50 mass%. The temperature for acid treatment is, for example, from 70 to 150°C. The duration of the acid treatment is, for example, from 0.1 to 24 hours. In addition, the acid treatment can be carried out under reduced pressure, under normal pressure, or under increased pressure. After such acid treatment, the solid (containing ND agglutinates) is preferably washed with water, for example, by decantation until the pH of the precipitation liquid reaches, for example, 2 to 3. In a case where the content of the metal oxide in the ND particle crude product obtained by the detonation method is small, the acid treatment as described above may be omitted.

### Oxidation treatment

The oxidation treatment is a process to remove graphite from the ND particle crude product using an oxidizing agent. The ND particle crude product obtained by the detonation method contains graphite (black lead), and this graphite is derived from carbons having not formed ND crystals, among the carbons released by partially incomplete combustion of the explosive used. For example, the graphite can be removed from the ND particle crude product by allowing a predetermined oxidizing agent to act on the ND particle crude product in a water solvent after the acid treatment described above. In addition, the oxidizing agent is allowed to act on the ND particle crude product, and this can introduce an oxygen-containing group, such as a carboxyl group or a hydroxy group, onto the ND surface.

Examples of the oxidizing agent used in the oxidation treatment include chromic acid, chromic anhydride, dichromic acid, permanganic acid, perchloric acid, nitric acid, and their mixtures, mixed acids of at least one selected from those and another acid (e.g., sulfuric acid), and their salts. In an embodiment of the present invention, among these oxidizing agents, a mixed acid (in particular, a mixed acid of sulfuric acid and nitric acid) is preferably used in terms of environmental friendliness and excellent action of oxidizing and removing the graphite.

The mixing ratio of sulfuric acid and nitric acid (the former/the latter, mass ratio) in the above mixed acid is preferably, for example, from 60/40 to 95/5 in terms of being able to efficiently oxidize and remove the graphite at a temperature of, for example, not lower than 130°C (particularly preferably not lower than 150°C, and the upper limit is, for example, 200°C) at or near normal pressure (for example, from 0.5 to 2 atm). The lower limit is preferably 65/35 and particularly preferably 70/30. In addition, the upper limit is preferably 90/10, particularly preferably 85/15, and most preferably 80/20.

With the ratio of nitric acid in the mixed acid greater than the above range, the content of sulfuric acid, which has a high boiling point, would decrease, thus the reaction temperature at or near normal pressure would be lowered to, for example, not higher than 120°C, tending to reduce the removal efficiency for the graphite. On the other hand, with the ratio of nitric acid in the mixed acid less than the above range, the content of nitric acid, which greatly contributes to the oxidation of the graphite, would decrease, thus tending to reduce the removal efficiency for the graphite.

The amount of the oxidizing agent (in particular, the mixed acid) used is, for example, from 10 to 50 parts by mass, preferably from 15 to 40 parts by mass, and particularly preferably from 20 to 40 parts by mass, relative to 1 part by mass of the ND particle crude product. In addition, the amount of sulfuric acid used in the mixed acid is, for example, from 5 to 48 parts by mass, preferably from 10 to 35 parts by mass, and particularly preferably from 15 to 30 parts by mass, relative to 1 part by mass of the ND particle crude product, and the amount of nitric acid used in the mixed acid is, for example, from 2 to 20 parts by mass, preferably from 4 to 10 parts by mass, and particularly preferably from 5 to 8 parts by mass, relative to 1 part by mass of the ND particle crude product.

Furthermore, when the mixed acid is used as the oxidizing agent, a catalyst may be used together with the mixed acid. The use of a catalyst can further improve the removal efficiency for the graphite. Examples of the catalyst include copper (II) carbonate. The amount of the catalyst used is, for example, approximately from 0.01 to 10 parts by mass relative to 100 parts by mass of the ND particle crude product.

The temperature for oxidation treatment is, for example, from 100 to 200°C. The duration of the oxidation treatment is, for example, from 1 to 24 hours. The oxidation treatment can be carried out under reduced pressure, under normal pressure, or under increased pressure.

### Drying

In the present method, drying is then preferably carried out. For example, a liquid is vaporized from the ND particle-containing solution obtained through the above process using a spray dryer, an evaporator, or the like, and then the resulting residual solid is dried by heat drying in an oven for drying. The temperature for heat drying is, for example, from 40 to 150°C. Through such drying, ND powder is obtained.

### Oxygen oxidation

In an oxygen oxidation, the ND powder is heated using a gas atmosphere furnace under an atmosphere of gas of a predetermined composition containing oxygen. Specifically, the ND powder is placed in the gas atmosphere furnace, an oxygen-containing gas is fed into or passed through the furnace, the temperature inside the furnace is raised to a temperature condition set as the heating temperature, and the oxygen oxidation treatment is carried out.

The temperature condition of the oxygen oxidation treatment is, for example, from 250 to 500°C. To obtain ND particles having a negative zeta potential, the temperature condition of this oxygen oxidation treatment is preferably relatively high, for example, from 400 to 450°C. In addition, the oxygen-containing gas is a mixed gas containing an inert gas in addition to oxygen. Examples of the inert gas include nitrogen, argon, carbon dioxide, and helium. The oxygen concentration in the mixed gas is, for example, from 1 to 35 vol.%.

### Hydrogenation

When ND particles having a positive zeta potential are desired, hydrogenation is carried out after the oxygen oxidation described above. In the hydrogenation, the ND powder having undergone the oxygen oxidation is heated using a gas atmosphere furnace under an atmosphere of gas of a predetermined composition containing hydrogen. Specifically, a hydrogencontaining gas is fed into or passed through the gas atmosphere furnace in which the ND powder is placed, the temperature inside the furnace is raised to a temperature condition set as the heating temperature, and the hydrogenation treatment is carried out. The temperature condition of this hydrogenation treatment is, for example, from 400 to 800°C. In addition, the hydrogencontaining gas is preferably a mixed gas containing an inert gas in addition to hydrogen. Examples of the inert gas include nitrogen, argon, carbon dioxide, and helium. The hydrogen concentration in the mixed gas is, for example, from 1 to 50 vol.%.

### Disintegration

After purification through a series of processes as described above, the ND particles may still retain a form of agglutinates (secondary particles) in which the primary particles interact very strongly and aggregate. Thus, disintegration is preferably carried out to separate the primary particles from the agglutinates. Specifically, first, the ND powder having undergone the oxygen oxidation or the subsequent hydrogenation are suspended in pure water to prepare slurry containing the ND particles. In preparing the slurry, the ND particle suspension may be centrifuged or ultrasonicated to remove relatively large aggregates from the ND particle suspension. The slurry is then subjected to a wet disintegration treatment. The disintegration treatment can be carried out using, for example, a high shearing mixer, a high shear mixer, a homomixer, a ball mill, a bead mill, a high-pressure homogenizer, an ultrasonic homogenizer, or a colloid mill. The disintegration treatment may be carried out by combining them. In terms of efficiency, a bead mill is preferably used.

Through such disintegration, an ND particle aqueous dispersion containing the ND primary particles can be obtained. The dispersion obtained through the disintegration may be subjected to a classification operation to remove coarse particles.

### Drying

In the present method, drying is then preferably carried out. For example, a liquid is vaporized from the ND particle aqueous dispersion obtained through the above process using a spray dryer, an evaporator, or the like, and then the resulting residual solid is dried by heat drying in an oven for drying. The temperature for heat drying is, for example, from 40 to 150°C. Through such drying, ND particles are obtained as a powder.

### Modification

The ND particles including a surface-modifying group containing a polyglycerol chain can be obtained, for example, by ring-opening polymerization of glycidol directly on the ND particles obtained through the above process. The ND particles include a carboxyl group and a hydroxyl group formed in the production process on the surfaces thereof, and the surfaces of the NDs can be modified with the polyglycerol chains by reacting these functional groups with glycidol.

The reaction between the ND particles and glycidol (ring-opening polymerization) can be carried out, for example, by adding glycidol and a catalyst to the ND particles in an inert gas atmosphere and heating to 50 to 100°C. An acidic catalyst or a basic catalyst can be used as the catalyst. Examples of the acidic catalyst include boron trifluoride etherate, acetic acid, and phosphoric acid, and examples of the basic catalyst include triethylamine, pyridine, dimethylaminopyridine, and triphenylphosphine.

The amount of glycidol used in the ring-opening polymerization is, for example, at least 20 parts by mass and preferably from 20 to 150 parts by mass relative to 1 part by mass of the ND particles. The amount of glycidol used less than the above range would be less likely to provide sufficient dispersibility.

Thus, the ND particles (in particular, the ND particles including a surface-modifying group containing a polyglycerol chain) in an embodiment of the present invention are preferably ND particles including a ring-opening polymerization product of glycidol of not less than 20 parts by mass (preferably from 20 to 150 parts by mass) on the surface relative to 1 part by mass of the ND particles.

After completion of the reaction, the resulting reaction product is preferably purified, for example, by means, such as filtration, centrifugation, extraction, water washing, neutralization, or their combinations. This provides the ND particle dispersion (preferably the ND particle aqueous dispersion) in an embodiment of the present invention.

### Electronic component

An electronic component according to an embodiment of the present invention includes the plating film. The electronic component according to an embodiment of the present invention may include an additional plating film in addition to the plating film and may include, for example, one layer or two or more layers of base plating films, such as Ni/Au plating films. Examples of the electronic component according to an embodiment of the present invention include connecting components (e.g., such as connectors) for electronic devices, such as personal digital assistants (PDA) and mobile phones.

### Leveling agent

The leveling agent for plating (or the conductivity enhancer, brightener, or antioxidant for plating films) according to an embodiment of the present invention contains the nanodiamond particles including a surface-modifying group containing a polyglycerol chain.

The leveling agent may contain an additional component in addition to the nanodiamond particles including a surface-modifying group containing a polyglycerol chain, but the proportion of the nanodiamond particles in the total amount of the leveling agent is, for example, not less than 50 mass%, preferably not less than 60 mass%, particularly preferably not less than 70 mass%, most preferably not less than 80 mass%, and especially preferably not less than 90 mass%.

The leveling agent need not contain the surfactant described above that has been used to disperse ND particles in the art. Thus, the content of the surfactant (e.g., such as a non-ionic surfactant with a molecular weight of 30000 to 200000) in the leveling agent in an embodiment of the present invention is, for example, less than 0.5 g/L, preferably not greater than 0.1 g/L, particularly preferably not greater than 0.05 g/L, and most preferably not greater than 0.01 g/L, and the leveling agent is especially preferably substantially free of the surfactant.

### Examples

Hereinafter, the present invention will be described more specifically with reference to examples, but the present invention is not limited by these examples. The ND particle concentration, particle diameter, and zeta potential were measured by the following methods.

### ND particle concentration

The ND particle concentration in the ND particle aqueous dispersion was calculated based on a weighed value of a dispersion weighed to be from 3 to 5 g and a weighed value of a dried product (powder) remained after water was vaporized from the weighed dispersion by heating, the weighed values being measured with a precision balance.

### Particle diameter

The particle diameter (median diameter, D10, D50, and D90) of the ND particles contained in the ND particle aqueous dispersion or the plating bath was measured by dynamic light scattering (non-contact backscattering) using an instrument (trade name "Zetasizer Nano ZS") available from Malvern Panalytical Ltd.

### Zeta potential

The zeta potential of the ND particles contained in the ND particle aqueous dispersion was measured by laser Doppler electrophoresis using an instrument (trade designation "Zetasizer Nano ZS") available from Malvern Panalytical Ltd. The ND particle aqueous dispersion subjected to the measurement was prepared by dilution with ultrapure water to an ND particle concentration of 0.2 mass%, followed by ultrasonic irradiation with an ultrasonic cleaner, and the zeta potential was measured at a temperature of 25°C.

### Preparative Example 1

The ND particle aqueous dispersion was produced through the following processes.

### Formation

First, a molded explosive primed with an electric detonator was placed inside a pressure-resistant detonation vessel (iron vessel, capacity of 15 m³), and the vessel was sealed. As the explosive, 0.50 kg of a mixture of TNT and RDX (TNT/RDX (mass ratio) = 50/50) was used. Next, the electric detonator was triggered, and the explosive was detonated in the vessel. Subsequently, the vessel was allowed to stand at room temperature for 24 hours, and the temperatures of the vessel and the inside of the vessel were lowered. After this cooling, an ND particle crude product (containing agglutinates of the ND particles formed by the detonation method and soot) deposited on the inner wall of the vessel was collected, and the ND particle crude product was obtained.

### Acid treatment

Next, the ND particle crude product obtained in the formation was subjected to the acid treatment. Specifically, 6 L of 10 mass% hydrochloric acid was added to 200 g of the ND particle crude product to prepare slurry, and the slurry was subjected to a heat treatment (heating temperature: from 85 to 100°C) under reflux at normal pressure conditions for 1 hour. Next, after cooling, the solid (containing the ND agglutinates and soot) was washed with water by decantation. The solid was repeatedly washed with water by decantation until the pH of the precipitation liquid reached 2 from the low pH side.

### Oxidation treatment

Next, the treatment by mixed acid was carried out. Specifically, 6 L of a 98 mass% aqueous sulfuric acid solution and 1 L of a 69 mass% aqueous nitric acid solution were added to the precipitation liquid (containing the ND agglutinates) obtained through the decantation after the acid treatment to form slurry, and then the slurry was heated (heating temperature: from 140 to 160°C) under reflux at normal pressure conditions for 48 hours. Next, after cooling, the solid (containing the ND agglutinates) was washed with water by decantation. A supernatant from the initial water washing was colored, and thus the solid was washed repeatedly with water by decantation until the supernatant became visually transparent.

### Drying

Next, 1000 mL of the ND particle-containing liquid obtained through the water washing treatment described above was subjected to spray drying using a spray dryer (trade name "Spray Dryer B-290", available from Nihon Büchi Co., Ltd.). Through the drying, 50 g of ND powder was obtained.

### Oxygen oxidation

Next, 4.5 g of the ND powder obtained as described above was allowed to stand inside a furnace core tube of a gas atmosphere furnace (trade name "Gas Atmosphere Tube Furnace KTF045N1", available from Koyo Thermo Systems Co., Ltd.), and nitrogen gas was continuously passed through the furnace core tube at a flow rate of 1 L/min for 30 minutes. Then, the flowing gas was switched from nitrogen to a mixed gas of oxygen and nitrogen, and the mixed gas was continuously passed through the furnace core tube at a flow rate of 1 L/min. The oxygen concentration in the mixed gas is 4 vol.%. After switching to the mixed gas, the temperature inside the furnace was raised to a temperature set for heating of 400°C. The temperature was raised at a rate of 10°C/min to 380°C, a temperature 20°C lower than the temperature set for heating, and then at a rate of 1°C/min from 380°C to 400°C. Then, the oxygen oxidation treatment was carried out on the ND powder in the furnace while the temperature condition inside the furnace was maintained at 400°C. The duration of the treatment was 3 hours.

After the oxygen oxidation treatment, an oxygen-containing functional group, such as a carboxy group, on the ND particles was evaluated by FT-IR analysis described below. From a spectrum obtained by this analysis, an absorption was detected as a main peak at or around 1780 cm⁻¹ attributed to C=O stretching vibration. This result confirmed that the ND powder mainly contained ND particles (ND-COOH) including a carboxyl group as a surface functional group.

### FT-IR analytical conditions

Fourier transform infrared spectroscopy (FT-IR) was carried out using an FT-IR instrument (trade name "Spectrum 400 FT-IR", available from PerkinElmer Co., Ltd.). In this measurement, the infrared absorption spectrum was measured for the sample while it was heated to 150°C in a vacuum atmosphere. For heating in a vacuum atmosphere, a Model-HC 900 Heat Chamber and a TC-100WA Thermo Controller, available from ST Japan INC., were used in combination.

### Disintegration

First, 0.3 g of the ND powder having undergone the oxygen oxidation and 29.7 mL of pure water were mixed in a 50-mL sample bottle, and about 30 mL of slurry was obtained. Next, the pH of the slurry was adjusted by adding a 1 N aqueous sodium hydroxide solution, and then the slurry was subjected to an ultrasonic irradiation for 2 hours using an ultrasonic irradiator (trade name "Ultrasonic Irradiator AS-3", available from AS ONE Corporation). Subsequently, bead milling was carried out using a bead milling apparatus (trade name "Parallel 4-Tube Sand Grinder Model LSG-4U-2L", available from Aimex Co., Ltd.). Specifically, 30 mL of the slurry after the ultrasonic irradiation and zirconia beads with a diameter of 30 µm were sealed in a 100-mL mill vessel (available from Aimex Co., Ltd.), and then the apparatus was actuated to carry out bead milling. In this bead milling, the amount of zirconia beads charged is about 33% relative to the capacity of the mill vessel, the rotation speed of the mill vessel is 2570 rpm, and the duration of the milling is 2 hours.

Next, the slurry having undergone the disintegration was centrifuged (classification operation) using a centrifuge. The centrifugal force in this centrifugation treatment was 20000 xg, and the duration of the centrifugation was 10 minutes.

Next, 25 mL of the supernatant of the ND particle-containing solution having undergone the centrifugation treatment was collected, and the ND particle aqueous dispersion (ND-COOH) was obtained. The ND particle concentration in the ND particle aqueous dispersion was 11.8 g/L. In addition, the pH measured using a pH test paper (trade name "Three Band pH Test Paper", available from AS ONE Corporation) was 9.33. The particle diameter D50 was 3.97 nm, the particle diameter D90 was 7.20 nm, and the zeta potential was -42 mV.

The particles of the resulting ND particle aqueous dispersion were subjected to crystal structure analysis using an X-ray diffractometer (trade name "SmartLab", available from Rigaku Corporation), As a result, a strong peak was observed at the characteristic peak position of diamond, that is, at the diffraction peak position from the (111) plane of the diamond crystal. This result confirmed that the resulting particles were diamond particles.

### Modification

The ND particle aqueous dispersion obtained above was dried using an evaporator, and a black dry powder was obtained. The resulting dry powder (100 mg) was added to 12 mL of glycidol placed in a glass reactor, ultrasonicated in an ultrasonic cleaner (trade name "BRANSON 2510", available from Marshall Scientific LLC.) at room temperature for 2 hours, and dissolved. This solution was allowed to react at 140°C for 20 hours while it was being stirred under a nitrogen atmosphere. The reaction mixture was cooled, then 120 mL of methanol was added, the reaction mixture was ultrasonicated and then centrifuged at 50400 G for 2 hours, and a precipitate was obtained. To this precipitate, 120 mL of methanol was added, and the ultrasonification-centrifugation is repeated five times in the same manner. The precipitate was finally dialyzed with pure water using a dialysis membrane (Spectra/Prodialysis membrane, MWCO from 12 to 14 kDa) to replace residual methanol with water and lyophilized, and the ND particles modified with polyglycerol (PG-ND particles) was obtained as a gray powder.

The ratio of the ND particles and the surface-modifying group measured by TG-DTA thermal analysis was ND particles:the surface-modifying group = 1:0.7.

The PG-ND gray powder and water were added and adjusted to a concentration of 10 g/L based on the mass of the ND particles, and a PG-ND particle aqueous dispersion was obtained.

In addition, the resulting PG-ND gray powder was measured by small angle X-ray scattering (SAXS method) using an X-ray diffractometer (trade name "SmartLab", available from Rigaku Corporation), and the primary particle diameter of the PG-ND was estimated for a range of scattering angles from 1° to 3° using a software for particle diameter distribution analysis (trade name "NANO-Solver", available from Rigaku Corporation). In this estimation, it was assumed that the PG-ND primary particles were spherical and had a particle density of 3.51 g/cm³. The result showed that the average particle diameter of the PG-ND was 7 nm.

Here, the average particle diameter was measured in the same manner also for ND particles obtained by a shock compression method, and modified ND particles obtained by PG surface-modifying the ND particles in the same manner as for the ND particles obtained by the detonation method. The result showed that the average particle diameter of the unmodified ND particles obtained by a shock compression method was 20 nm, and the average particle diameter of the modified ND particles was 23 nm. Thus, it was found that the PG-ND particles obtained using the ND particles obtained by the detonation method had a smaller particle diameter and are superior for applications in which the particles are dispersed in the noble metal matrix constituting the plating film.

### Example 1

The PG-ND particle aqueous dispersion obtained in Preparative Example 1 was added to a plating solution with a rhodium concentration of 5 g/L (trade name "Rhodex", available from Electroplating Engineers of Japan Ltd.), and a plating bath (1) (PG-ND particle concentration in the plating bath: 0.1 g/L) was obtained.

In the measurement of the particle diameter of the PG-ND particles in the plating bath (1), the particle diameter (D10) was 30 nm, the particle diameter (D50) was 44 nm, and the particle diameter (D90) was 76 nm.

The plating bath (1) was transparent and had no turbidity at all (haze value = 0). In the measurement of the plating bath (1) placed in a quartz glass cell with an optical path length of 1 cm, the light transmittance of light at a wavelength of 600 nm was not less than 95%.

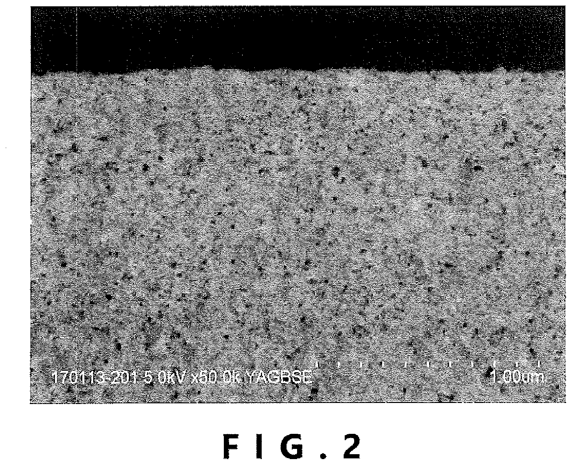

A copper plate (purity of 99.9%, length 20 mm x width 20 mm x thickness 2 mm) as a member on which a plating film is to be formed was subjected to degreasing and washing and then electrolytic Ni/Au plating treatment, and a copper plate with a base plating film was obtained. This copper plate with a base plating film was plated using the plating bath (1) under conditions of pH 1, liquid temperature of 50°C, and a current density of 1.3 A/dm² while the plating bath (1) was stirred for 15 minutes, and a plating film formed of a metal rhodium-ND particle composite material (a content of the ND particles of 12 area% and a film thickness of 5 µm, see FIG. 2) was formed on the base plating film. In the resulting film, ND particles were uniformly and highly dispersed, and the surface was smooth.

### Example 2

A plating bath (2) (PG-ND particle concentration in the plating bath: 0.05 g/L) was obtained in the same manner as in Example 1 except for changing the added amount of the PG-ND particle aqueous dispersion obtained in Preparative Example 1, and a plating film was obtained in the same manner as in Example 1 except for using the resulting plating bath (2).

### Example 3

A plating bath (3) (PG-ND particle concentration in the plating bath: 0.02 g/L) was obtained in the same manner as in Example 1 except for changing the added amount of the PG-ND particle aqueous dispersion obtained in Preparative Example 1, and a plating film was obtained in the same manner as in Example 1 except for using the resulting plating bath (3).

### Example 4

A plating bath (4) (PG-ND particle concentration in the plating bath: 0.01 g/L) was obtained in the same manner as in Example 1 except for changing the added amount of the PG-ND particle aqueous dispersion obtained in Preparative Example 1, and a plating film was obtained in the same manner as in Example 1 except for using the resulting plating bath (4).

### Example 5

A plating bath (5) (PG-ND particle concentration in the plating bath: 0.005 g/L) was obtained in the same manner as in Example 1 except for changing the added amount of the PG-ND particle aqueous dispersion obtained in Preparative Example 1, and a plating film was obtained in the same manner as in Example 1 except for using the resulting plating bath (5).

### Example 6

A plating bath (6) (PG-ND particle concentration in the plating bath: 0.002 g/L) was obtained in the same manner as in Example 1 except for changing the added amount of the PG-ND particle aqueous dispersion obtained in Preparative Example 1, and a plating film was obtained in the same manner as in Example 1 except for using the resulting plating bath (6).

### Comparative Example 1

A plating bath (7) was obtained in the same manner as in Example 1 except for using an aqueous dispersion of the ND particles (ND-COOH) obtained through the oxygen oxidation in Preparative Example 1 instead of the PG-ND particle aqueous dispersion. The ND particles in the plating bath (7) aggregated and formed a large mass.

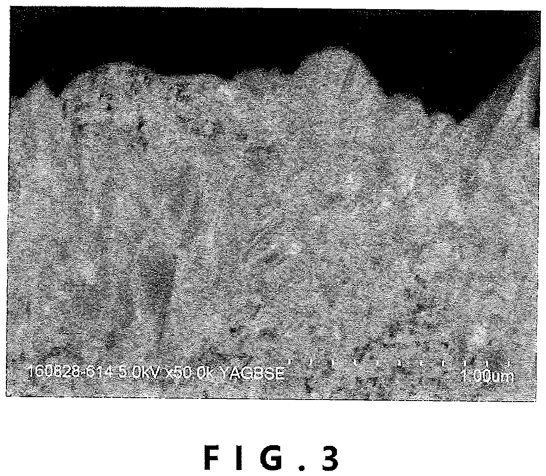

In addition, a plating film was obtained in the same manner as in Example 1 except for using the plating bath (7) instead of the plating bath (1) (see FIG. 3). The resulting plating film had an uneven surface.

### Comparative Example 2

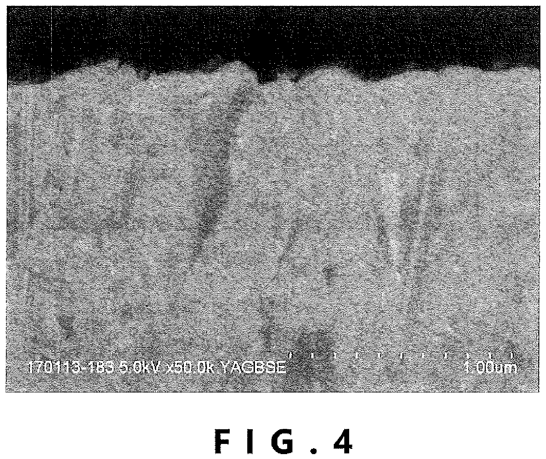

A plating film was formed in the same manner as in Example 1 except for using a plating bath (8) containing a plating solution with a rhodium concentration of 5 g/L (trade name "Rhodex", available from Electroplating Engineers of Japan Ltd.) and containing no ND particle dispersion instead of the plating bath (1) (see FIG. 4). The resulting plating film had an uneven surface.

### Gloss measurement

The gloss (in GU) of the plating films obtained in Examples 1 to 6 and Comparative Examples 1 and 2 were measured using a measuring instrument (trade name "Gloss Checker IG410", available from Horiba, Ltd.). The reflectance at an incident angle of 60° was measured, and the gloss (GU) was calculated. The results are summarized and shown in the table below.

From the table below, it was found that the gloss (GU) of the plating film increases according to the added amount of the ND particles.

**[Table 1]**

| | PG-ND concentration (g/L) | ND-COOH concentration (g/L) | Surface roughness (Ra: µm) | Gloss (GU) |
|---|---|---|---|---|
| Example 1 | 0.1 | - | 0.07 | 723 |
| Example 2 | 0.05 | - | 0.12 | 531 |
| Example 3 | 0.02 | - | 0.27 | 322 |
| Example 4 | 0.01 | - | 0.25 | 335 |
| Example 5 | 0.005 | - | 0.30 | 297 |
| Example 6 | 0.002 | - | 0.29 | 275 |
| Comparative Example 1 | - | 0.1 | 0.30 | 240 |
| Comparative Example 2 | - | - | 0.30 | 232 |

### Example 7

The PG-ND particle aqueous dispersion obtained in Preparative Example 1 was added to a plating solution with a gold concentration of 2 g/L [a plating solution prepared by removing a brightener from trade name "Aurobond XPH20" (available from Electroplating Engineers of Japan Ltd.)], and a plating bath (9) (PG-ND particle concentration in the plating bath: 0.1 g/L) was obtained.

In the measurement of the particle diameter of the PG-ND particles in the plating bath (9), the particle diameter (D10) was 35 nm, the particle diameter (D50) was 52 nm, and the particle diameter (D90) was 97 nm.

The plating bath (9) was transparent and had no turbidity at all (haze value = 0). In the measurement of the plating bath (9) placed in a quartz glass cell with an optical path length of 1 cm, the light transmittance of light at a wavelength of 600 nm was not less than 95%.

A copper plate with a base plating film obtained in the same manner as in Example 1 was plated using the plating bath (9) under conditions of pH 2, liquid temperature of 55°C, and a current density of 1 A/dm² while the plating bath (9) was stirred for 12 minutes, and a plating film formed of a gold-ND particle composite material (a content of the ND particles of 7 area% and a film thickness of 1.6 µm) was formed on the base plating film. In the resulting film, ND particles were uniformly and highly dispersed, and the surface was smooth.

### Comparative Example 3

A plating film (film thickness: 0.97 µm) was formed in the same manner as in Example 7 except for using a plating bath (10) containing a plating solution with a gold concentration of 2 g/L (trade name "Aurobond XPH20", available from Electroplating Engineers of Japan Ltd.) and containing no ND particle dispersion instead of the plating bath (9). The resulting plating film had an uneven surface.

The gloss (GU) of the plating films obtained in Example 7 and Comparative Example 3 were measured in the same manner as described above. The results are summarized and shown in the table below.

**[Table 2]**

| | PG-ND concentration (g/L) | ND-COOH concentration (g/L) | Surface roughness (Ra: µm) | Gloss (GU) |
|---|---|---|---|---|
| Example 7 | 0.1 | - | 0.07 | 725 |
| Comparative Example 3 | - | - | 0.25 | 305 |

From Table 2, it was found that the addition of the ND particles increases the gloss (GU) of the plating film.

### Comparative Example 4

A plating film was formed in the same manner as in Example 1 except for using a plating solution with a rhodium concentration of 5 g/L (trade name "Super Rhodium No. 1", available from Electroplating Engineers of Japan Ltd.) (without addition of the ND particle dispersion) instead of the plating bath (1),

### Contact resistance value measurement

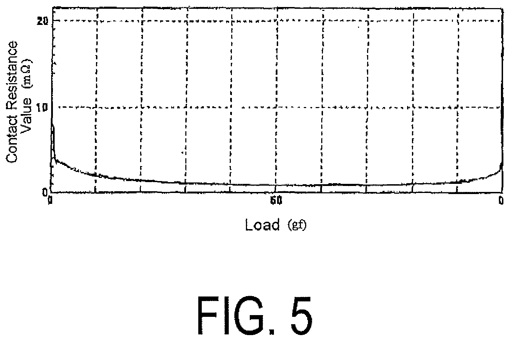

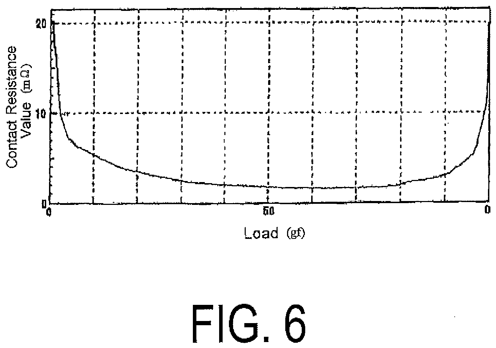

The plating films obtained in Example 1 and Comparative Example 4 were measured for the contact resistance value (mΩ) by pressing a four-terminal probe on the surface of the plating films under the following conditions. The contact resistance value measurement results of Example 1 and Comparative Example 4 are shown in FIGS. 5 and 6.

Measuring instrument: Electrical contact simulator CRS-1, available from Yamasaki Seiki Co., Ltd.
Probe: Au
Contact Pressure: from 0 to 50 gf
Voltage: 200 mV
Current: 10 mA
Lens: Two point measurements (a 20 mΩ range and a 200 mΩ range) for each sample

**[Table 3]**

| | PG-ND concentration (g/L) | Surface roughness (Ra: µm) | Contact resistance value (mΩ) | | | | |
|---|---|---|---|---|---|---|---|
| | | | 0 gf | 5 gf | 10 gf | 25 gf | 50 gf |
| Example 1 | 0.1 | 0.07 | 3-10 | 2.8-3.0 | 2.0-2.1 | 1.1-1.3 | 0.8-0.9 |
| Comparative Example 4 | - | 0.03 | 10-20 | 8.0-9.0 | 4.0-6.0 | 1.9-2.9 | 1.2-1.7 |

From Table 3, FIGS. 5 and 6, it was found that the addition of the ND particles reduces the contact resistance value. In addition, it was found that the difference between the contact resistance value at a load of 50 gf and the contact resistance value at a load of 5 gf was not greater than 5 mΩ, exhibiting good electrical conductivity also at a low contact load.

To summarize the above, configurations and variations according to an embodiment of the present invention will be described below.
(1) A plating film including a noble metal matrix and nanodiamond particles dispersed in the noble metal matrix.
(2) The plating film according to (1), wherein the plating film has a gloss at an incident angle of 60° of not less than 250 GU.
(3) The plating film according to (1) or (2), wherein the plating film is produced using a plating bath containing noble metal ions and nanodiamond particles.
(4) The plating film according to (3), wherein the plating film has a gloss at an incident angle of 60° greater by not less than 20 GU compared with a plating film produced using a plating bath having an identical composition except for not containing nanodiamond particles.
(5) The plating film according to any one of (1) to (4), wherein the plating film has a contact resistance value at a load of 50 gf of not greater than 1 mΩ, and a difference between a contact resistance value at a load of 50 gf and a contact resistance value at a load of 5 gf of not greater than 5 mΩ.
(6) The plating film according to any one of (1) to (5), wherein the plating film has a surface roughness (Ra) of not greater than 0.5 µm.
(7) The plating film according to any one of (1) to (6), wherein a particle diameter (D50) of the nanodiamond particles dispersed in the noble metal matrix by SEM is in a range from 4 to 100 nm.
(8) The plating film according to any one of (1) to (7), wherein the nanodiamond particles include a surface-modifying group containing a sterically repulsive group.
(9) The plating film according to any one of (1) to (7), wherein the nanodiamond particles include a surface-modifying group containing a sterically repulsive group derived from a hydrophilic polymer.
(10) The plating film according to any one of (1) to (7), wherein the nanodiamond particles include a hydrophilic surface-modifying group.
(11) The plating film according to (10), wherein the nanodiamond particles including a surface-modifying group containing a polyglycerol chain include a surface-modifying group containing a polyglycerol chain obtained by ring-opening polymerization of not less than 20 parts by mass (preferably from 20 to 150 parts by mass) of glycidol relative to 1 part by mass of the nanodiamond particles.
(12) The plating film according to any one of (1) to (11), wherein the nanodiamond particles include a surface-modifying group containing a polyglycerol chain.
(13) The plating film according to any one of (1) to (12), wherein a content of the nanodiamond particles is from 0.5 to 25 area% of the plating film.
(14) The plating film according to any one of (1) to (13), wherein the nanodiamond particles include from 0.4 to 1.0 parts by mass of a surface-modifying group per part by mass of the nanodiamond particles.
(15) A plating film producing method for producing the method being used for producing the plating film described in any one of (1) to (14) by electrolytic plating using a plating bath containing noble metal ions and nanodiamond particles, the plating bath containing from 0.001 to 1.0 g/L of the nanodiamond particles and having a light transmittance of light at a wavelength of 600 nm of not less than 95%.
(16) A plating bath containing noble metal ions and nanodiamond particles, the plating bath containing from 0.005 to 1.0 g/L of the nanodiamond particles and having a light transmittance of light at a wavelength of 600 nm of not less than 95%.
(17) The plating bath according to (16), wherein the nanodiamond particles include a surface-modifying group containing a sterically repulsive group.
(18) The plating bath according to (16), wherein the nanodiamond particles include a surface-modifying group containing a sterically repulsive group derived from a hydrophilic polymer.
(19) The plating bath according to (16), wherein the nanodiamond particles include a hydrophilic surface-modifying group.
(20) The plating bath according to (16), wherein the nanodiamond particles include a surface-modifying group containing a polyglycerol chain.
(21) The plating bath according to any one of (16) to (20), wherein the nanodiamond particles include from 0.4 to 1.0 parts by mass of a surface-modifying group per part by mass of the nanodiamond particles.
(22) The plating bath according to any one of (16) to (21), wherein the plating bath has a haze value from 0 to 5.
(23) The plating bath according to any one of (16) to (22), wherein a content of a surfactant is less than 0.5 g/L (preferably not greater than 0.1 g/L, particularly preferably not greater than 0.05 g/L, and most preferably not greater than 0.01 g/L or less).
(24) The plating bath according to (23), wherein the surfactant has a molecular weight from 30000 to 200000.
(25) The plating bath according to (23) or (24), wherein the surfactant is a non-ionic surfactant.
(26) An electronic component including the plating film described in any one of (1) to (14).
(27) A leveling agent for plating, the leveling agent containing nanodiamond particles including a surface-modifying group containing a polyglycerol chain.
(28) The leveling agent for plating according to (27), wherein a content of a surfactant content is less than 0.5 g/L (preferably not greater than 0.1 g/L, particularly preferably not greater than 0.05 g/L, and most preferably not greater than 0.01 g/L).
(29) The leveling agent for plating according to (28), wherein the surfactant has a molecular weight from 30000 to 200000.
(30) The leveling agent for plating according to (28) or (29), wherein the surfactant is a non-ionic surfactant.

### Industrial Applicability

The plating film according to an embodiment of the present invention is suitably used in connecting components for electronic devices, decorative items, and the like. In addition, the plating film according to an embodiment of the present invention is suitably used in connecting components, such as switches and connectors, used in electrical and electronic equipment.

### Reference Signs List

1 Nanodiamond particle including a surface-modifying group
2 Nanodiamond particle (portion)
3 Surface-modifying group

## Claims

1. A plating film comprising a noble metal matrix and nanodiamond particles dispersed in the noble metal matrix.

2. The plating film according to claim 1, wherein the plating film has a gloss at an incident angle of 60° of not less than 250 GU.

3. The plating film according to claim 1 or 2, wherein the plating film is produced using a plating bath comprising noble metal ions and nanodiamond particles.

4. The plating film according to claim 3, wherein the plating film has a gloss at an incident angle of 60° by not less than 20 GU compared with a plating film produced using a plating bath having an identical composition except for not containing nanodiamond particles.

5. The plating film according to any one of claims 1 to 4, wherein the plating film has a contact resistance value at a load of 50 gf of not greater than 1 mΩ, and a difference between a contact resistance value at a load of 50 gf and a contact resistance value at a load of 5 gf of not greater than 5 mΩ.

6. The plating film according to any one of claims 1 to 5, wherein the plating film has a surface roughness (Ra) of not greater than 0.5 µm.

7. The plating film according to any one of claims 1 to 6, wherein a particle diameter (D50) of the nanodiamond particles dispersed in the noble metal matrix by scanning electron microscopy is in a range from 4 to 100 nm.

8. The plating film according to any one of claims 1 to 7, wherein the nanodiamond particles comprise a surface-modifying group containing a sterically repulsive group.

9. The plating film according to any one of claims 1 to 8, wherein the nanodiamond particles comprise a surface-modifying group containing a polyglycerol chain.

10. The plating film according to any one of claims 1 to 9, wherein a content of the nanodiamond particles is from 0.5 to 25 area% of the plating film.

11. A plating film producing method for producing the plating film described in any one of claims 1 to 10 by electrolytic plating using a plating bath comprising noble metal ions and nanodiamond particles, the plating bath containing from 0.001 to 1.0 g/L of the nanodiamond particles and having a light transmittance of light at a wavelength of 600 nm of not less than 95%.

12. A plating bath comprising noble metal ions and nanodiamond particles, the plating bath containing from 0.005 to 1.0 g/L of the nanodiamond particles and having a light transmittance of light at a wavelength of 600 nm of not less than 95%.

13. An electronic component comprising the plating film described in any one of claims 1 to 10.

14. A leveling agent comprising nanodiamond particles comprising a surface-modifying group containing a polyglycerol chain.
